# EUROPEAN PATENT SPECIFICATION

(11) **EP 0 520 786 B1**
(45) Date of publication and mention of the grant of the patent: **22.01.1997**
(21) Application number: 92305840.8
(22) Date of filing: 25.06.1992
(51) Int. Cl.: F25D 25/02

(54) **Shelf for a refrigerated compartment**
Regal für ein Kühlfach
Etagère pour un compartiment réfrigéré

(30) Priority: 25.06.1991 US 721104
(43) Date of publication of application: 30.12.1992
(73) Proprietor: Gemtron Corporation, Sweetwater, Tennessee 37874 (US)
(72) Inventor: Herrmann, Robert S, Grand Haven, Michigan 49417 (US); Kane, Edmund J, Holland, Michigan 49424 (US); Gilbert, Donald C, Muskegon Heights, Michigan 49444 (US)
(74) Representative: Sheard, Andrew Gregory

(56) References cited:
- DE-U- 8 535 795
- DE-U- 9 006 513
- FR-A- 2 111 257
- US-A- 3 331 646

## Description

This invention relates to a shelf as defined in the preamble of claim 1.

As is the nature of articles containing liquid which are stored in a refrigerator or freezer, many such articles are spillable and do spill. Such a spill will typically soak into other items or contaminate other roods in tne refrigerated compartment. Extensive efforts to clean up are required since the spill will commonly flow down, through the compartment, from shelf to shelf. Therefore, it is desirable to provide containment measures for limiting the area of such a spill. One such measure is a spill resistant shelf. Such a shelf will contain a spill to that shelf and minimize if not preclude the downward flow of the spill through the compartment.

One such spill resistant shelf is disclosed in US-A-4,934,541 which discloses a refrigerator shelf having a two-piece plastic "picture frame" circumscribing the periphery of a glass plate to provide a spill resistant refrigerator shelf. For liquid spill resistance, a silicon seal can be provided between the upper frame member and the glass plate.

US-A-3,633,983 discloses the use of a glass shelf member which is framed by spaced, parallel side portions, an interconnecting rear portion and a portion extending transversely across the front of the glass. The front, side and rear framing portions are specified as being extruded material and having a glass receiving groove for receiving the glass shelf member. However, a liquid tight seal around the perimeter edge of the glass is not provided or suggested. A spill on this shelf, particularly of a liquid, will seep between the glass and the supporting frame, flowing down through the compartment.

Another problem common to the above discussed shelf structures still remains. That is, items which are spilled upon the shelves can seep between the glass plate shelf member and the surrounding frame members where it is virtually impossible to remove or otherwise clean. Thus, and in spite of the sanitary benefits of using glass, an unsanitary condition can easily develop as food stuffs become trapped between the shelf members and frame members of the shelf structures described above.

Even with the benefit of spill containment provided by a spill resistant shelf, it can still be a tedious task to remove the spilled item from the shelf. This is especially so with spilled liquids which must be removed from the shelf, typically by sponging or mopping the spill with a cloth or the like and conveying it to a bowl or pail. If one attempts to remove the shelf and pour the spill directly into a sink, the shelf will easily tip and the spill will readily pour over the edge of the shelf, defeating the principal purpose of the spill resistant shelf.

Another consideration in designing shelf structures for refrigerated compartments is the circulation or convection of air through the compartment. It is desirable to provide for some means of circulation in order to maintain a homogeneous temperature distribution and avoid stratification. Without a provision for circulation, the air in the compartment will become stratified, having a range of temperature zones with a relatively warm zone at the top of the compartment and a relatively cold zone at the bottom of the compartment. Therefore, one will typically design the shelf structure to allow for air flow between the edges of the shelf and the walls of the compartment. However, this decreases the shelf surface area, namely the amount of space provided between the shelf and the compartment walls. Furthermore, in situations where a framing structure circumscribes the shelf, such as those discussed above, the width of the frame additionally reduces the shelf area available. Such reductions in shelf area directly reduce the capacity of the refrigerator to hold items. While the reduction in shelf area attributable to air passage around the shelf perimeter is dictated by thermodynamic performance, the lost area attributable to perimeter framing results from structural and design limitations imposed by accommodating the spill resistant shelf.

US-A-3331646 and DE-U-9006513 relate to arrangements as set out in the pre-characterising portion of claim 1.

Accordingly, the present invention seeks to provide a shelf from which spilled liquid can easily be removed. This object is achieved by a shelf having the features of claim 1.

The moulded rim may both maximize the spill retention capability of the shelf and minimize the potential for inaccessible entrapment of a spilled material between the perimeter rim and the shelf member. Further, the moulded perimeter rim can be made smaller than the perimeter frame of the presently known spill resistant shelf and can thereby maximize the available shelf area.

Advantageously, the perimeter rim is moulded around at least a portion of supporting (shelf) brackets. This may assure a secure and durable attachment between the shelf member and the support brackets. The perimeter rim is suitably a single unit and/or a one-piece circumferential portion, preferably made using a moulding process with a mouldable (e.g. polymeric) material. Suitably it will be integral with the or each shelf support (e.g. brackets) and/or will preferably form a liquid tight seal with the shelf.

The drainage means minimizes the further potential for causing a mess in cleaning up a spill. The drainage means is adapted to allow drainage of any liquid off or away from the shelf. Preferably it comprises an aperture, slot, channel, groove or other suitable structure that can be opened and/or closed (e.g. by means of a manually operable stopper, plug or clip) to control the flow of liquid when desired.

Preferably, slide means (e.g. tracks ) are provided (e.g. along the shelf support brackets) for receiving a slidable receptacle, e.g. bin, drawer or tray. Such a receptacle will usually be provided underneath the shelf. In one embodiment the slide means, e.g. tracks, are attached to the shelf brackets. In another embodiment, the slide tracks are integrally moulded into the shelf support brackets.

In a preferred embodiment of the invention, tempered glass is used as the shelf member to enhance light distribution through the refrigerated compartment and to enhance viewing of items supported by the shelving. The sides and back of the shelf are spaced from the walls of the compartment in another preferred embodiment of the invention to provide proper circulation around the shelf and the use of the moulded perimeter rim allows the formation of a narrow perimeter rim, maximizing the shelf support area.

According to the invention there is provided a shelf suitable for use in a refrigerated compartment, the shelf comprising:
a shelf panel having a top surface suitable for receiving and supporting an item set thereupon and having a perimeter edge;
at least one pair of support brackets for supporting the shelf panel; and
a single piece perimeter rim moulded about the perimeter edge to form a liquid tight seal with the shelf panel, each bracket extending from the perimeter rim; characterised in that the shelf further comprises drain means for draining a spilled liquid from the shelf.

Preferably the shelf further comprises slide means for receiving and supportinq a drawer (or bin, tray or other suitable (e.g. slidable receptacle) under the shelf panel so that the drawer can be slidably moved. For example, the drawer may be slid towards, and away from, the shelf, for example between a closed position and an open position. Suitably the perimeter rim projects above the top surface of the shelf. This may define a spill dam so that some or any liquid disposed thereon may be contained by the perimeter rim.

According to claim 1, the shelf comprises drain means for draining a spilled liquid from the shelf. Such drain means may comprise an aperture through the shelf panel near the perimeter edge, and may include plug means for closing the aperture. Alternatively or in addition, the drain means will comprise a channel which extends through the perimeter rim from the top surface, and may include plug means for closing the channel.

The perimeter rim is suitably moulded around at least a portion of the support brackets so that the shelf member and the support brackets are secured together by the perimeter rim.

Preferably each support bracket has an interior surface which faces the interior surface of another support bracket.

The slide means may comprise a slide bracket attached to each interior surface. Thus each support bracket may be an elongated member having a predetermined length, wherein the slide bracket includes at least one slide rail for guiding the drawer. The or each slide rail may extend along at least a portion of the length of the support bracket. Preferably the slide means is moulded into each interior surface of the support brackets.

Each support bracket can be an elongated member having a predetermined length and the slide means can include at least one slide rail for guiding the drawer. The or each slide rail may extend along at least a portion of the length of the support bracket.

The invention also relates to a refrigerated enclosure, such as a refrigerator, comprising one or more shelves according to any of claims 1 to 7.

While it will be realised that some preferred features are mentioned in relation to one embodiment of the invention, it should be realised that they are equally applicable to another embodiment of the invention, in particular those features which concern the perimeter rim, support means (e.g. brackets), the sliding receptacle (e.g. drawer) and drain means. Thus, preferred features and characteristics for one aspect of the present invention are as for another *mutatis mutandis.*

The present invention thus provides a durable support rim for a spill resistant refrigerator shelf. The moulded perimeter rim may maximize sealing contact between the rim and the shelf member for enhanced spill retention and to minimize the potential for entrapment of food stuffs between the perimeter rim and the shelf member. It may also minimise the potential for subsequent development of an unsanitary condition. The use of a moulded rim in accordance with the present invention can offer enhanced aesthetics by minimizing seams and joints associated with the rim and may give a more streamlined appearance. Such aesthetic benefits are also provided by the use of moulded slide tracks for a bin storage unit which can be integrally moulded as a single piece with the perimeter rim and the shelf support brackets.
Fig. 1 is a perspective view from above and to one side of a first embodiment of a refrigerator shelf according to the present invention inside a refrigerator;
Fig. 2 is a section along line II-II of Fig. 1;
Figs. 3 to 5A are sections of second to fifth embodiments of a refrigerator shelf according to the invention similar to the section of the first embodiment in Fig. 2;
Fig. 6 is a section along line VI-VI of Fig. 1 with a storage bin in a closed position;
Fig. 7 is a section along line VI-VI of Fig. 1 with a storage bin in an open position;
Fig. 8 is a fragmentary plan of a first embodiment of a drain suitable for use with the shelf of Fig. 1;
Fig. 9 is a section along line IX-IX of Fig. 8;
Fig. 10 is a fragmentary plan of a second embodiment of a drain suitable for use with the shelf of Fig. 1;
Fig. 11 is a section along line XI-XI of Fig. 10;
Fig. 12 is a fragmentary plan of a third embodiment of a drain suitable for use with the shelf of Fig. 1;
Fig. 13 is a section along section line XIII-XIII of Fig. 12;
Fig. 14 is a plan of a fourth alternative embodiment of a drain for the shelf of Fig. 1;
Fig. 15 is a section along line XV-XV of Fig. 14;
Fig. 16 is a fragmentary plan of a fifth embodiment of a drain suitable for use with the shelf of Fig. 1;
Fig. 17 is a section along line XVII-XVII of Fig. 16;
Fig. 18 is a fragmentary plan of a sixth embodiment of a drain suitable for use with the shelf of Fig. 1; and
Fig. 19 is a section along section line XIX-XIX of Fig. 18.

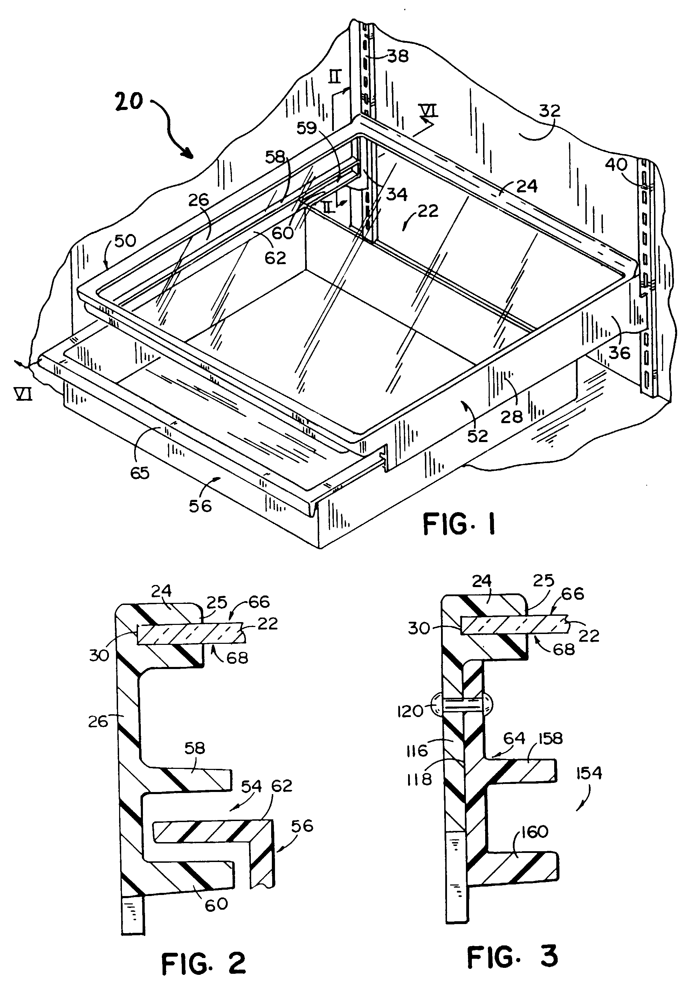

Referring now to the drawings in greater detail, and Fig. 1 in particular, a refrigerator shelf assembly 20 according to the present invention, comprises a shelf panel 22, a perimeter rim 24 and support brackets 26, 28.

The shelf panel 22 may be contoured to facilitate a variety of specific purposes, but will generally provide a planar surface to support items placed thereon for storage in a refrigerator. Shelf panel 22 may also be formed from a light transmitting material, preferably optically clear, tempered glass, to enhance light distribution through the refrigerator compartment. Shelf panel 22 has a perimeter edge 30 about which perimeter rim 24 is moulded (see e.g. Figs. 1-3).

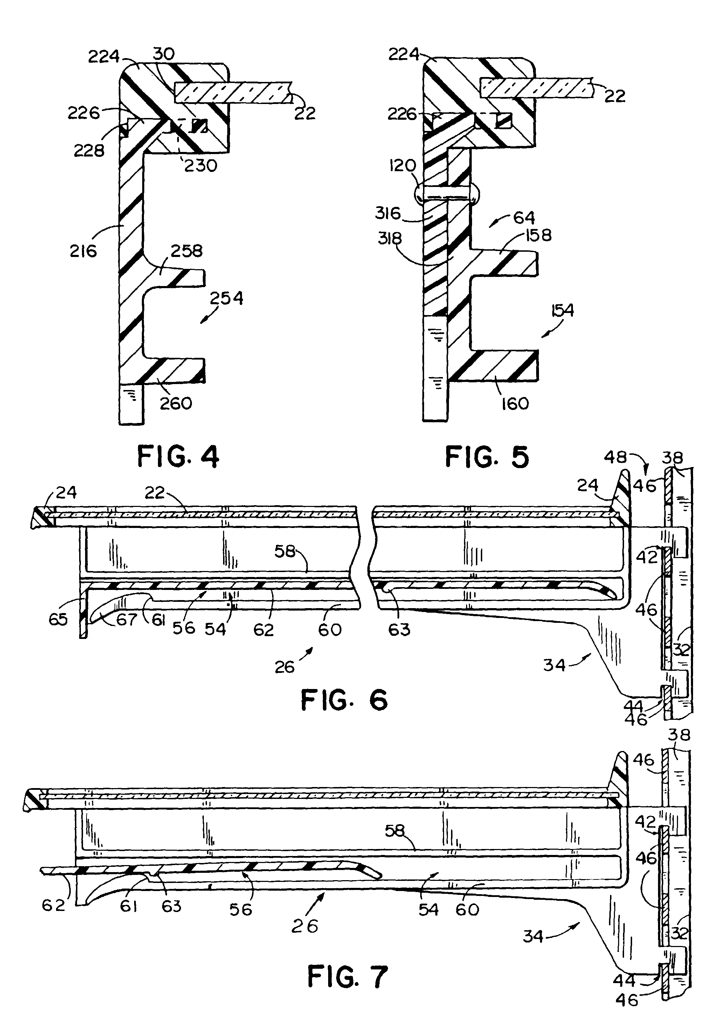

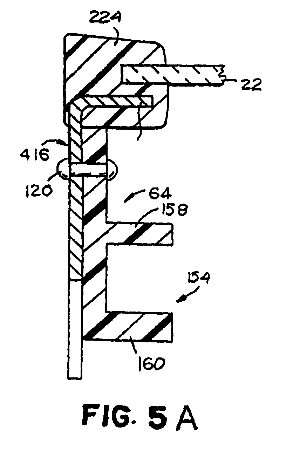

The shelf assembly 20 is preferably cantilevered forward by brackets 26, 28 from a rear wall 32 of a refrigerator, and is preferably used as a vertically adjustable shelf. Therefore, brackets 26,28 are elongated members, having rear ends 34, 36 which are preferably adapted for releasable engagement with shelf tracks 38, 40, provided on a rear wall 32 of the refrigerator as is commonly practiced (see Figs. 1, 6, and 7). Recesses 42, 44, formed in ends 34, 36 function as hooks for engaging rungs 46 in tracks 38, 40 to support brackets 26, 28. Thus, the shelf assembly 20 may be positioned at a plurality of locations spaced apart vertically along tracks 38, 40. The, shelf assembly 20 is preferably sized to provide air circulation space between the side walls of the refrigerator and the side and rear edges of shelf assembly 20. An air circulation space 48, for example, is provided between the perimeter rim 24 and the rear wall 32 (see Figs. 6 and 7).

The brackets 26, 28 extend along at least a portion of opposing sides 50, 52 of the shelf assembly 20. In the most preferred embodiment, the perimeter rim 24 and support brackets 26, 28 are integrally moulded in one piece (see e.g. Fig. 2). Shelf assembly 20 may optionally be provided with a pair of slide tracks 54 for slidably receiving and supporting a storage bin or drawer 56 (see e.g. Figs. 1, 2, 6 and 7). Each slide track 54 is defined between spaced upper and lower slide rails 58, 60. Each slide track 54 receives and guides a corresponding outward extending flange portion 62 of the drawer 56.

The drawer 56 may be a metal stamping or plastic moulding as is commonly known and extends to an open position for access to the inside of drawer 56. A forward stop 61 is formed along lower rail 60 for engagement with a projecting stop 63 on drawer flange 62 to prevent accidental over extension of drawer 56 (see Figs. 6 and 7). If removal of drawer 56 from slide track 54 is desired, this is easily accomplished by lifting the front end of drawer 56 so that stop 63 passes above stop 61. Conversely, drawer 56 may be positioned under shelf panel 22 in a closed position (see Fig. 6). A flange 65 is provided across the front of drawer 56 to provide a handle for pulling the drawer 56 to its open position or pushing the drawer to its closed position. The flange 65 in combination with the front end 67 of the lower rail 60 provides a closure stop for positioning the drawer 56 in the closed position.

The perimeter rim 24, support brackets 26, 28 and, optionally, upper and lower slide rails 58, 60 are preferably moulded in a convenient one-step process. During assembly, the shelf panel 22 is held and positioned within a mould while a mouldable material, from which perimeter rim 24, support brackets 26, 28 and, optionally, slide rails 58, 60 are made, is injected and flows into a continuous cavity provided in the mould around a perimeter edge 30 of the shelf panel 22, thereby encapsulating the perimeter edge 30, forming the perimeter rim 24, support brackets 26, 28, and slide rails 58, 60 (see e.g. Fig. 2). The mouldable material may include copolymer plastics such as a combination of ethylene and polypropylene or other structural, resinous plastics such as ABS or polyvinyl chloride. Further, a colouration pigment to provide desired colours may be added to the mouldable plastic prior to moulding. For example, titanium dioxide may be added for a white colouration.

As the mouldable material cures, i.e., cools, hardens, and sets, it becomes a tough and resilient mass, extending continuously around the perimeter edge 30 of shelf panel 22, forming support brackets 26, 28 and, optionally, slide rails 58, 60. The perimeter rim 24 is moulded to extend above the top surface 66 of shelf panel 22 and is specifically moulded to define a continuous vertical wall 25 near the perimeter edge 30 of shelf panel 22. The forming of perimeter rim 24 by moulding as a single, continuous body around the perimeter edge 30 creates a liquid tight seal between perimeter rim 24 and shelf panel 22. This liquid tight seal and the configuration of perimeter rim 24 with continuous vertical wall 25 combine to form a spill dam for containing spills which may occur upon shelf panel 22.

Preferably, slide rails 58, 60 are integrally moulded with support brackets 26, 28 (see e.g. Fig. 2). However, in an alternative embodiment, a support bracket 116 may be moulded without a slide track 54, but a slide track 154 may be added to a support bracket 116 by attaching a slide bracket 64 to the inside surface of support bracket 116 (see Fig. 3). Slide bracket 64 may be connected to support bracket 116 by rivets 120 or by other commonly known fastening means, and includes spaced slide rails 158, 160 which function in the same manner as rails 58, 60.

In a second embodiment, a support bracket 216 may be moulded separately from a perimeter rim 224 (see Fig. 4). The support bracket 216 has a support flange portion 226 which projects inwardly, under the shelf panel 22 from the top edge 228 of support bracket 216. A corresponding, mirror image support bracket (not shown) to support bracket 216 is used opposite to the support bracket 216, across shelf panel 22. A series of apertures 230 may be defined in flange 226 to enhance mechanical attachment between support bracket 216 and perimeter rim 224. During assembly, the shelf panel 22, support bracket 216 and opposing support bracket are held and positioned to project into a cavity, surrounding perimeter edge 30 of shelf panel 22, within a mould while a mouldable material is injected and flows into the mould cavity as disclosed above, around the perimeter edge 30 of shelf panel 22 and flange portion 226, encapsulating the perimeter edge 30 and flange portion 226 of each support bracket. The support bracket 216 is preferably moulded with integral slide rails 258, 260, defining slide track 254.

In a third embodiment, a support bracket 316, similar to bracket 216 above, is moulded without slide rails (see Fig. 5). As with bracket 116 above, the slide bracket 64 may be optionally attached to the inside surface 318 of support bracket 316, in the same manner as discussed with support bracket 116 above, for providing the slide track 154.

In a fourth embodiment, the slide bracket 64 may also be used in the manner disclosed above, but with a refrigerator shelf assembly which incorporates a metal support bracket 416 (Fig. 5A).

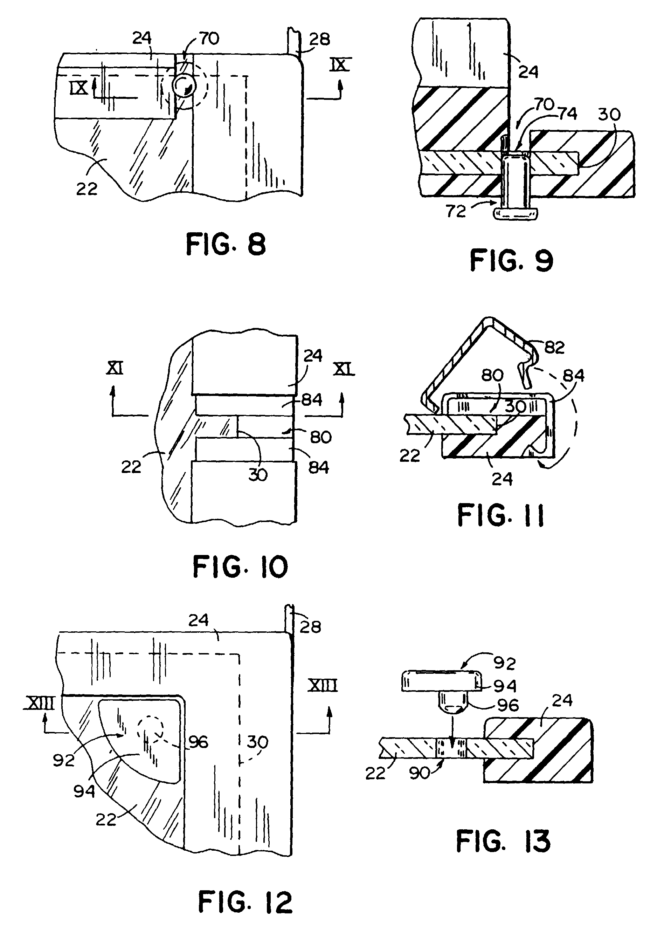

For convenience in removing a spill, especially a liquid spill, a drain is provided in the refrigerator shelf assembly 20. In a first embodiment of a drain for the refrigerator shelf assembly 20, a drainage channel 70 may be moulded into the perimeter rim 24 (see Figs. 8 and 9). A drain plug 72 is used to close the channel 70 until such time as a spill occurs on the shelf assembly 20 and a user wishes to withdraw plug 72 to drain the spill. A drain hole 74 is provided in channel 70, adjacent the perimeter edge 30 of shelf panel 22 for receiving the drain plug 72 from the underside of the shelf assembly 20. The drain plug 72 and hole 74 are sized so that friction holds the plug 72 in the hole 74. Preferably, plug 72 is moulded from the same material as perimeter rim 24 and is resilient such that it tightly seals the hole 74 and compressingly engages the facing surfaces of rim 24 adjacent channel 70. For balanced aesthetics, a second drain or a nonfunctional drain look-alike may be symmetrically located on shelf assembly 20.

A second embodiment of a drain for the shelf assembly 20 is shown in Figs. 10 and 11. A drainage channel 80 is moulded in perimeter rim 24. A flush fitting, clip-like drain plug 82 clips over perimeter rim 24 to close the drainage channel 80. A shoulder 84, adjacent to and on either side of drainage channel 80, is recessed into perimeter rim 24 so that the plug 82 will fit flush with the outer surface of perimeter rim 24 and is moulded to conform to the shape of the inside of plug 82 for good sealing contact. Plug 82 is preferably moulded from the same material as perimeter rim 24, but may also be formed from stainless steel or other suitable materials. For balanced aesthetics, a second drain or a nonfunctional drain look-alike may be symmetrically located on shelf assembly 20.

A third embodiment of a drain for the shelf assembly 20 is shown in Figs. 12 and 13. A drain hole 90 is provided through the shelf panel 22 and a drain plug 92 having a triangularly shaped head 94 and a cylindrical plug body 96 is provided to close the drain hole 90. The shape of head 94 matches the inside corner of rim 24 adjacent the hole 90. Preferably, the plug 92 is formed from the same material as the perimeter rim 24. For balanced aesthetics, a second drain or a non-functional drain look-alike may be symmetrically located on shelf assembly 20.

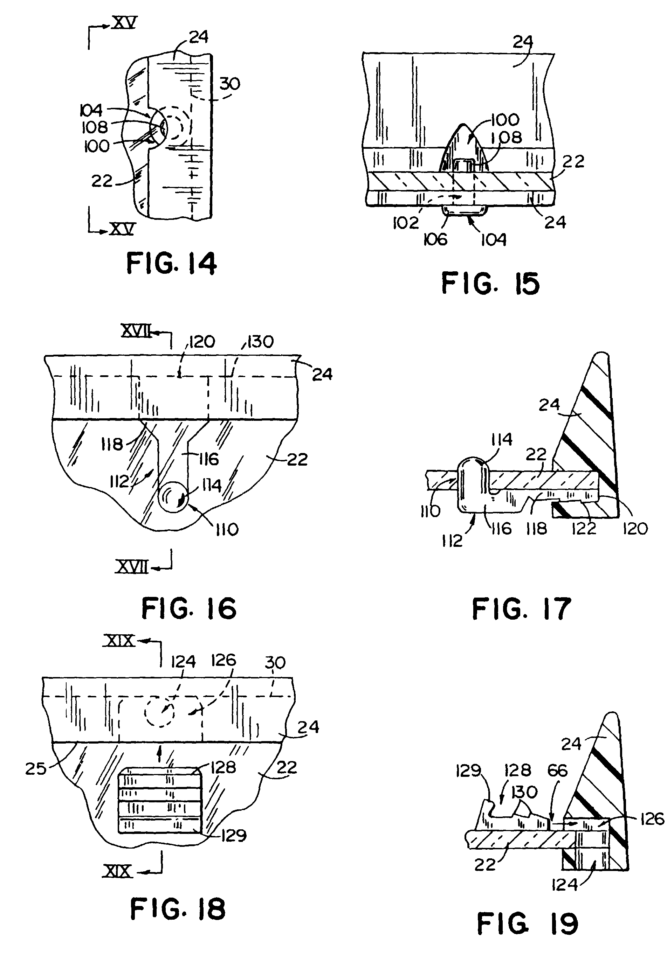

A fourth embodiment of a drain for the shelf assembly 20 is shown in Figs. 14 and 15. A notch 100 is moulded in perimeter rim 24, near the perimeter edge 30 of the shelf panel 22. A drain hole 102, through shelf panel 22 and the bottom of rim 24, is aligned with notch 100. A drain plug 104, having an enlarged head 106 and cylindrical body 108, is provided to close the drain hole 102. Preferably, the plug 104 is formed from the same material as perimeter rim 24.

A fifth embodiment of a drain for the shelf assembly 20 is shown in Figs. 16 and 17. A drain hole 110 is provided through shelf panel 22, near the perimeter edge 130. A drain plug 112 having a stopper portion 114, a flexible arm 116 and a base portion 118 is provided to close the drain hole 110. A notch 120 is moulded into the perimeter rim 24 to receive a base 118 of plug 112. A series of transverse ribs 122 are formed in base 118 for engagement with the perimeter rim 24 to resist removal of base 118 from notch 120. The arm 116 extends towards the hole 110 from the base 118 and provides a flexible and springy positioning member for plug 112. The plug 112 is preferably formed from the same material as perimeter rim 24.

A sixth embodiment of a drain for the shelf assembly 20 is shown in Figs. 18 and 19. A drain hole 124 is provided adjacent the perimeter edge 30. The drain hole 124 extends through the shelf member 22 and the perimeter rim 24 as shown. A notch 126 is moulded into perimeter rim 24. The notch 126 extends from vertical wall 25 to the perimeter edge 30 and aligns with drain hole 124 to define a passageway from the top surface 66. A drain plug 128, corresponding to the notch 126, is removably received in notch 126 for closing and sealing drain hole 124. The drain plug 128 is preferably moulded from the same material as the perimeter rim 24 and is sized for a friction fit with notch 126. A large projecting rib 129 forms a handle for plug 128 and small ribs 130 may be provided to enhance insertion and removal of plug 128.

## Claims

1. A shelf (20) suitable for use in a refrigerated compartment, the shelf comprising:
a shelf panel (22) having a top surface (66) suitable for receiving and supporting an item set thereupon and having a perimeter edge (30);
at least one pair of support brackets (26,28) for supporting the shelf panel (22); and
a single piece perimeter rim (24) moulded about the perimeter edge to form a liquid tight seal with the shelf panel, each bracket extending from the perimeter rim; characterised in that the shelf further comprises drain means for draining a spilled liquid from the shelf.

2. A shelf according to claim 1 wherein the shelf further comprises slide means (54) for receiving and supporting a drawer (56) under the shelf panel (22) so that the drawer may be slid between a closed position and an open position.

3. A shelf according to claim 1 or claim 2 wherein the perimeter rim (24) projects above the top surface (66) to define a spill dam so that any liquid disposed thereon can be contained by the perimeter rim.

4. A shelf according to any preceding claim wherein the drain means comprises an aperture (74) through the shelf panel (22) near the perimeter edge (30) and includes plug means (72) for closing the aperture.

5. A shelf according to any preceding claim wherein the drain means comprises a channel (80) which extends through the perimeter rim (24) from the top surface (66) and includes plug means (82) for closing the channel.

6. A shelf according to any of claims 1 to 5 wherein the perimeter rim (24) and support brackets (26,28) are integrally moulded in one piece.

7. A shelf as claimed in any preceding claim wherein said pair of brackets (26,28) are spaced and are adapted to be cantilevered from a wall (32) of a refrigerator compartment, and said rim (24) is in situ moulded to secure said shelf panel (22) and said pair of brackets together.

8. A refrigerated enclosure, such as a refrigerator, comprising one or more shelves according to any of claims 1 to 7.

## Patentansprüche

1. Zur Verwendung in einem Kühlfach geeignetes Regal (20), welches umfaßt:
- eine Regalplatte (22) mit einer zur Aufnahme und zum Tragen eines darauf gestellten Gegenstands geeigneten und eine Begrenzungskante (30) aufweisenden oberen Fläche (66);
- wenigstens ein Paar Tragknaggen (26, 28) zum Stützen der Regalplatte (22); und
- einen einstückigen Begrenzungsrand (25), der um die Begrenzungskante herum geformt ist, um einen flüssigkeitsdichten Abschluß mit der Regalplatte zu bilden, wobei sich jede Knagge von dem Begrenzungsrand aus erstreckt,
**dadurch gekennzeichnet, daß**
das Regal weiterhin Entwässerungsvorrichtungen zum Entwässern einer verschütteten Flüssigkeit von dem Regal.

2. Regal nach Anspruch 1,
**dadurch gekennzeichnet, daß**
das Regal weiterein Gleitvorrichtungen (54) zum Aufnehmen und Tragen einer Schublade (56) unter der Regalplatte (22) aufweist, so daß die Schublade zwischen einer geschlossenen und einer geöffneten Stellung gleiten kann.

3. Regal nach Anspruch 1 oder 2,
**dadurch gekennzeichnet, daß**
der Begrenzungsrand (24) über die obere Fläche (66) vorsteht, um eine Überflußkante zu bilden, so daß eine auf der Fläche befindliche Flüssigkeit durch den Begrenzungsrand gehalten wird.

4. Regal nach einem der vorhergehenden Ansprüche,
**dadurch gekennzeichnet, daß**
die Entwässerungsvorrichtung eine Öffnung (74) durch die Regalplatte (22) nahe der Begrenzungskante (30) und ein Steckelement (72) zum Verschließen der Öffnung aufweist.

5. Regal nach einem der vorhergehenden Ansprüche,
**dadurch gekennzeichnet, daß**
die Entwässerungsvorrichtung einen Kanal (10) aufweist, der sich von der obersten Fläche (66) durch den Begrenzungsrand (24) erstreckt und ein Steckelement (82) zum Verschließen des Kanals umfaßt.

6. Regal nach einem der Ansprüche 1 bis 5,
**dadurch gekennzeichnet, daß**
der Begrenzungsrand (24) und die Tragknaggen (26, 28) integral in einem Stück geformt sind.

7. Reagl nach einem der vorhergehenden Ansprüche,
**dadurch gekennzeichnet, daß**
das Paar Knaggen (26, 28) voneinander beabstandet und geeignet ist, von einer Wand (32) des Kühlfachs freitragend zu sein, und der Rand (24) in situ angeformt wird, um die Regalplatte (22) und das Paar Knaggen zusammen zu befestigen.

8. Kühlgehäuse, beispielsweise ein Kühlschrank, der eines oder mehrere Regal nach einem der Ansprüche 1 bis 7 enthält.

## Revendications

1. Etagère (20) convenant pour une utilisation dans un compartiment réfrigéré, l'étagère comprenant :
un panneau d'étagère (22) comportant une surface supérieure (66) qui convient pour recevoir et supporter un article établi dessus et comportant un bord de périmètre (30) ;
au moins une paire de consoles de support (26, 28) pour supporter le panneau d'étagère (22) ; et
un rebord de périmètre monopièce (24) moulé autour du bord de périmètre afin de former une étanchéité aux liquides avec le panneau d'étagère, chaque console s'étendant depuis le rebord de périmètre,
caractérisée en ce que l'étagère comprend en outre un moyen de drain pour drainer, depuis l'étagère, un liquide qui s'y est déversé.

2. Etagère selon la revendication 1, dans laquelle l'étagère comprend en outre un moyen de coulissement (54) pour recevoir et supporter un tiroir (56) sous le panneau d'étagère (22) de telle sorte que le tiroir puisse être coulissé entre une position fermée et une position ouverte.

3. Etagère selon la revendication 1 ou 2, dans laquelle le rebord de périmètre (24) fait saillie au-dessus de la surface supérieure (66) afin de définir une retenue de déversement de telle sorte qu'un quelconque liquide disposé dessus puisse être contenu par le rebord de périmètre.

4. Etagère selon l'une quelconque des revendications précédentes, dans laquelle le moyen de drain comprend une ouverture (74) au travers du panneau d'étagère (22) à proximité du bord de périmètre (30) et inclut un moyen de bouchon (72) pour fermer l'ouverture.

5. Etagère selon l'une quelconque des revendications précédentes, dans laquelle le moyen de drain comprend un canal (80) qui s'étend au travers du rebord de périmètre (24) depuis la surface supérieure (66) et inclut un moyen de bouchon (82) pour fermer le canal.

6. Etagère selon l'une quelconque des revendications 1 à 5, dans laquelle le rebord de périmètre (24) et les consoles de support (26, 28) sont moulés d'un seul tenant selon une seule pièce.

7. Etagère selon l'une quelconque des revendications précédentes, dans laquelle les consoles de ladite paire de consoles (26, 28) sont espacées et sont adaptées pour être supportées en porte à faux à partir d'une paroi (32) d'un compartiment de réfrigérateur, et ledit rebord (24) est moulé in situ afin de fixer ledit panneau d'étagère (22) et ladite paire de consoles ensemble.

8. Enceinte réfrigérée telle qu'un réfrigérateur comprenant une ou plusieurs étagères selon l'une quelconque des revendications 1 à 7.
